Europäisches Patentamt

European Patent Office

Office européen des brevets

⑩

(11) Publication number: **0 317 525**
**A1**

(12) **EUROPEAN PATENT APPLICATION**

(21) Application number: 88830482.1

(22) Date of filing: 11.11.88

(51) Int. Cl.⁴: **C 02 F 1/62**
C 02 F 1/32, C 02 F 1/28,
B 01 D 37/00

(30) Priority: 17.11.87 IT 4015087

(43) Date of publication of application:
**24.05.89 Bulletin 89/21**

(84) Designated Contracting States: **DE ES FR GB**

(71) Applicant: **Officine Augusto CATTANI & C. S.P.A.**
**Via G. Natta, 6/A**
**I-43100 Parma (IT)**

(72) Inventor: **Frassetto, Marco**
**Viale Pio VII, 38/8**
**I-16148 Genova (IT)**

(74) Representative: **Lanzoni, Luciano**
**c/o BUGNION S.p.A. Viale Trento Trieste, 25**
**I-41100 Modena (IT)**

(54) **A method of removing heavy metals from waste liquids discharged by dental surgery equipment, and a device for the implementation of such a method.**

(57) In a method for removing heavy metals from the liquids discharged by dental surgery equipment, soiled liquid is first pressurized, and then put through a succession of filters the last of which has a rated particle size of >02µm; the filtrate is then chemically desalinated. The device used to implement the method comprises a pump (2), from which the pressurized liquid is directed through one or more filters (3, 4) installed in series, and a chemical desalination device (5) by which the filtrate is treated before being discharged finally into the drain.

EP 0 317 525 A1

**Description**

The invention relates to a method of removing heavy metals from waste liquids discharged by dental surgery equipment, and to a device serving for the implementation of such a method.

Conventional dental surgery equipment comprises a number of units, for example, suction pump, spittle bowl, wash basins etc. from which soiled liquids laden with a variety of pollutant substances are discharged into the main drain.

In most instances, each unit will be fitted with a strainer serving to strap the larger particles of foreign matter, whereas the smaller particles and dissolved salts are allowed to run out into the drain.

Whilst it is true that the quantity of liquids in question is not particularly great, their pollution potential is markedly high, and accordingly, one is faced with the problem of how to remove as great a proportion as possible of the pollutant substances, especially heavy metals.

The object of the present invention is to provide a method, and a device for its implementation, that will permit of discharging a soiled liquid in which the level of pollution attributable to heavy metals is notably reduced, and at all events, acceptable in terms of current legislation.

One advantage of the method disclosed is that it can be implemented with a device which is simple to use and service.

The state object is achieved, together with others, by adoption of the method disclosed; such a method involves directing waste liquids from a collection tank into the main drain, in conventional manner, and is characterized in that it comprises the steps of pressurizing the soiled liquid drawn from the collection tank, directing the pressurized liquid through one or more mechanical filtration stages, subjecting the liquid at least once, on emergence from the final filtration stage, to chemical desalination, and discharging the desalinated filtrate into the drain.

According to the present invention, the method is implemented with a device characterized in that it comprises a pump, by which liquid is drawn from the collection tank and pressurized to 8...14 bar; one or more filters through which the pressurized liquid is directed, the farthest downstream of which is designed to trap particles of >02µm; and at least one conventional desalination device located downstream of the filters.

The invention will now be described in detail, by way of example, with the aid of the accompanying block diagram.

The equipment found in any modern dental surgery will comprise various units -viz, suction pump, spittle bowl, wash basins etc., from which waste liquids are discharged; more exactly, these waste liquids carry pollutants, especially heavy metals utilized during treatment.

In a typical system, each unit will incorporate a strainer designed to trap the larger particles of solid matter; nonetheless, the liquid emerging from the strainers remain charged with pollutants to a significant degree, and it is these liquids, accumulating in a collection tank denoted 1 in the diagram, that are treated by the method disclosed before being discharged into the main drain.

In a first step of the method disclosed, liquid drawn from the collection tank is pressurized to a level between 8 and 14 bar.

The pressurized liquid is then directed through one or more filtration stages, utilizing mechanical filters. In practical application, the pressure to which the liquid is raised, the effective number of single filtration stages and the diameter of their pores, which decrease progressively in size from one stage to the next, will be selected in such a way that the filter elements all collect comparable amounts of matter in substantially the same period; thus, the elements can all be replaced in a single operation, with clear advantages from the general running and servicing standpoint.

In a preferred version of the method disclosed, the final filtration stage will be calibrated to trap particles of nominal diameter down to than 2µm, thereby ensuring a notable level of purification, inasmuch as the particle size of the heavy metals remaining in the liquid ultimately discharged into the drain will be significantly smaller than that specified by current legislation in developed countries.

Following filtration, the liquid is subjected to a chemical desalination step to the end of removing salts that can form through the reaction of certain substances utilized during dental treatment. This step is effected by passing the filtrate through inorganic materials, such as carbon, or resin, by which the dissolved salts will be retained.

Following this final chemical desalination step, the liquid is discharged into the main drain. The method comprises a further step, during which pressurization and filtration are suspended; such a pause can be either triggered by arrival at a given pressure level upstream of the filters, or timed to occur at prescribed intervals, and serves to afford an opportunity of replacing the filter elements and/or of carrying out routine servicing on the device.

The soiled liquids are sterilized prior to being filtered, and in a preferred version of the method, this will be readily effected by admixing suitable chemicals or exposure to ultraviolet radiation, or employing other conventional means, while still in the collection tank; alternatively, such a step might be effected immediately downstream of the pressurization stage. By sterilizing, one ensures that the waste liquid directed into the filters will be bacteria-free, and accordingly, that no bacteria-related pollution will occur, especially when replacing the filter elements.

The accompanying block diagram shows a preferred embodiment of the device for implementation of the method described above.

1 denotes the collection tank, from which the waste liquid is transferred to a pump 2 and raised to a pressure of between 8 and 14 bar prior to being filtered. The diagram shows two filtration stages, denoted 3 and 4, though it is clear enough that the effective number would be determined on the basis of requirements.

However many filtration stages are provided, these will be ranged along the flow path of the liquid in progressively decreasing pore sizes, the stage 4 farthest downstream being calibrated to trap any particles down to 2μm.

5 denotes a chemical desalination device downstream of the final filtration stage 4, which will be of a conventional type using carbon, resins, etc... 6 denotes a pressure switch by which the pressure of the waste liquid is monitored upstream of the filters; pressure at this point will be determined, in effect, by the degree to which the filters are caked, and therefore increases proportionately.

On arrival of the pressure level at a given set point corresponding to an unacceptable condition of the filters, the switch 6 will cut in to shut off the pump 2, thereby inhibiting operation of the device to allow replacement of the filter elements. The pressure and flow rate specifications of the device will be calculated such that blockage of all the filter elements occurs substantially at the same time, and the interruptions for servicing are therefore minimized.

The device further comprises a time 7, by which a signal is triggered at regular intervals to shut off the pump 2 and suspend operation of the device. In practice, the device might be embodied with the pressure switch 6 only, or the time 7 only, or with both control facilities, as illustrated in the diagram; with both types of control incorporated, in fact, one is provided with an added assurance against irregular operation of the device.

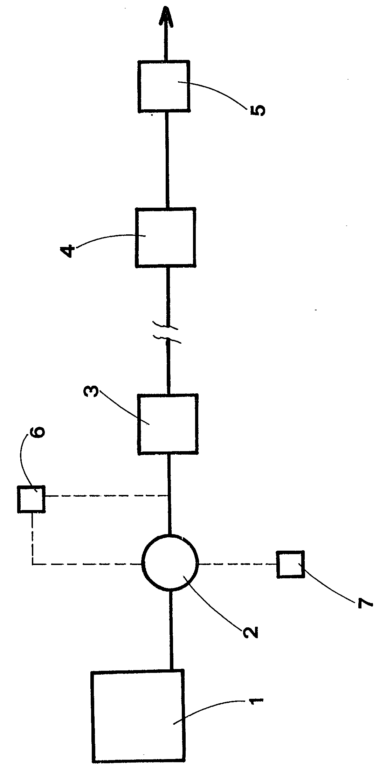

**Claims**

1) A method of removing heavy metals from the waste liquids discharged from dental surgery equipment, of the type whereby soiled liquids accumulate in at least one collection tank before flowing into the main drain,
characterized
in that it comprises the steps of:
-pressurizing the soiled liquid drawn from the collection tank;
-directing the pressurized liquid through one or more mechanical filtration stages;
-subjecting the liquid at least once, on emergence from the final filtration stage, to chemical desalination;
-discharging the desalinated filtrate into the drain.

2) A method as in claim 1, wherein the pressurization step involves raising the pressure of the soiled liquid to a level between 8 and 14 bar.

3) A method as in claim 1, wherein the nominal size of particles trapped by the final filtration stage is >02μm.

4) A method as in claim 1, further comprising the step of temporarily suspending pressurization and subsequent filtration of the soiled liquid whenever a given pressure level registers in the liquid upstream of the filters.

5) A method as in claim 1, further comprising the step of temporarily suspending pressurization and subsequent filtration of the soiled liquid at prescribed intervals of time.

6) A method as in claim 4 or 5, further comprising the step of replacing all the filter elements during temporary suspension of the pressurization and filtration steps.

7) A method as in claim 1, further comprising the step of sterilizing the soiled liquid prior to the filtration step.

8) A device for removing heavy metals from the waste liquid discharged from dental surgery equipment, of the type by which soiled liquids are caused to accumulate in at least one collection tank before flowing into the main drain,
characterized
in that it comprises:
-a pump (2), by which liquid is drawn from the collection tank (1) and pressurized to 8...14 bar;
-one or more filters (3, 4) through which the pressurized liquid is directed, the farthest downstream of which is designed to trap particles of >02μm;
-at least one conventional desalination device (5) located downstream of the filters.

9) A device as in claim 8, further comprising a pressure switch (6) designed to monitor pressure of the liquid upstream of the filters and, on sensing a given pressure level, to produce a signal that causes the pump (2) to shut off.

10) A device as in claim 8, further comprising a timer (7) designed to produce a signal that causes the pump (2) to shut off at prescribed intervals of time.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | DE-A-3 417 248  (A. FERCH)<br>* Page 1, claim 1; page 3, claim 7; page 4, lines 1-14 *<br>--- | 1,3,4,6 -9 | C 02 F  1/62<br>C 02 F  1/32<br>C 02 F  1/28<br>B 01 D  37/00 |
| Y | EP-A-0 096 377  (E. ALHÄUSER)<br>* Page 5, line 16 - page 7, paragraph 4; figure 1 *<br>--- | 1,3,4,6 -9 | |
| Y | DE-A-2 263 412  (R. HENSEL)<br>* Page 11, claims 1,2,4-6 *<br>--- | 1,3,4,6 -9 | |
| A | BE-A- 855 768  (MANAGEMENTS OF NEW TECHNICS)<br>* Page 11, claims 1-3,5,6,8,10 *<br>----- | 1,3,7,8 | |

TECHNICAL FIELDS
SEARCHED (Int. Cl.4)

C 02 F

The present search report has been drawn up for all claims

| Place of search | Date of completion of the search | Examiner |
|---|---|---|
| THE HAGUE | 22-02-1989 | TEPLY J. |